Europäisches Patentamt

European Patent Office

Office européen des brevets

(19)

(11) Veröffentlichungsnummer: **0 261 525**
**B1**

(12) **EUROPÄISCHE PATENTSCHRIFT**

(45) Veröffentlichungstag der Patentschrift:
18.04.90

(21) Anmeldenummer: 87113334.4

(22) Anmeldetag: 11.09.87

(51) Int. Cl.⁴: **E05F 15/16,** F16H 1/16,
F16D 3/78

(54) Getriebeanordnung, insbesondere für Kraftfahrzeug-Fensterheberantriebe.

(30) Priorität: 24.09.86 DE 3632501

(43) Veröffentlichungstag der Anmeldung:
30.03.88 Patentblatt 88/13

(45) Bekanntmachung des Hinweises auf die Patenterteilung:
18.04.90 Patentblatt 90/16

(84) Benannte Vertragsstaaten:
DE ES FR GB IT

(56) Entgegenhaltungen:
DE-A- 2 706 034
DE-A- 2 952 408
DE-C- 3 403 259
FR-A- 2 457 421

(73) Patentinhaber: Siemens Aktiengesellschaft,
Wittelsbacherplatz 2, D-8000 München 2(DE)

(72) Erfinder: Knappe, Wolfram, Dipl.-Ing. (FH),
Talstrasse 45, D-8710 Kitzingen(DE)
Erfinder: Kümmel, Alfred, Dipl.-Ing., Eisgasse 93,
D-8710 Kitzingen(DE)

ACTORUM AG

## Beschreibung

Die Erfindung bezieht sich auf eine Getriebeanordnung, insbesondere für Kraftfahrzeug-Fensterheberantriebe, gemäß Oberbegriff des Anspruchs 1; eine derartige Getriebeanordnung ist durch das DE-GM 8 427 394 bekannt.

Bei der durch das DE-GM 8 427 394 bekannten, in einem Kraftfahrzeug-Fensterheberantrieb verwendeten, Schnecken-Getriebeanordnung wird die Fensterscheibe durch den Antriebsmotor mit vollem Moment in ihre Endstellung "Fenster geschlossen" bzw. "Fenster geöffnet" angetrieben. Zur Abdämpfung der dabei ansonsten auf den Motor und die übrigen Getriebekonstruktionsteile einwirkenden Stoßbelastungen ist eine Gummi-Dämpfungsscheibe zwischen dem von der Motorwelle über eine Schneckenwelle angetriebenen, im Getriebegehäuse gelagerten Zahnrad und einer axial vorgelagerten, mit der Abtriebswelle gekoppelten Mitnehmerscheibe zwischengelegt, welche beim Auflaufen des Motors in den zuvor geschilderten Endstellungen den Anschlagstoß in radialer und tagentialer Richtung abfängt.

Die Abtriebswelle ist in dem Getriebegehäuse drehbar gelagert und in der einen axialen Richtung über ein Abtriebsritzel und in der anderen axialen Richtung über die Mitnehmerscheibe und die weiteren auf die Abtriebswelle aufgesteckten Bauteile der Dämpfungsscheibe und des Zahnrades jeweils an dem Getriebegehäuse abgestützt; beim Zusammenbau ist wegen der in jedem Einzelfall sich ergebenden Einzelteiltoleranzen der montierten Bauteile darauf zu achten, daß einerseits bei großen Plustoleranzen eine axiale Verklemmung und dadurch bedingte Schwergängigkeit und andererseits bei großen Minustoleranzen Schwingungs- bzw. Laufgeräusche vermieden werden können. Im bekannten Fall hat man daher versucht, je nach im Einzelfall zunächt zu messener Gesamttoleranz einen Ausgleich durch Zwischenlegen von entsprechenden Scheiben oder Tellerfedern zu schaffen.

Der Erfindung liegt die Aufgabe zugrunde, die Bauteile mit den für eine Serienfertigung üblichen Toleranzen fertigen und trotzdem bei einfacher, insbesondere automatenfreundlicher, Montage eine hohe Betriebstüchtigkeit und Betriebsdauer der Getriebeanordnung, insbesondere unter Berücksichtigung der bei einem Einsatz für Fensterheberantriebe gegebenen großen betriebsmäßigen Temperaturunterschiede, gewährleisten zu können.

Die Lösung dieser Aufgabe gelingt bei einer Getriebeanordnung der eingangs genannten Art durch die Lehre des Anspruchs 1; vorteilhafte Ausgestaltungen der Erfindung sind jeweils Gegenstand der Unteransprüche.

Durch die erfindungsgemäße Ausbildung des Dämpfungselementes kann bei der Montage der Getriebeanordnung sowohl auf eine gesonderte Nachmessung der Summentoleranz in jedem Einzelfall als auch auf ein gesondertes Aufbringen von ein oder mehreren Scheiben bzw. Tellerfedern verzichtet werden, da einerseits die Federlippen einstückig an die Dämpfungsscheibe anformbar und mit dieser montierbar sind und andererseits durch die Verformung der Federlippen beim Zusammenbau der definiert vorzuspannenden Bauteile die unterschiedlichen Axialtoleranzen bei etwa gleichbleibendem Axialdruck ausgeglichen werden können. Einerseits ist die beim axialen gegenseitigen Verspannen der Bauteile gegenüber dem Getriebegehäuse durch die Verformung der Federlippen erzeugte Pressung bzw. Quetschung so groß, daß auch bei maximalem Toleranzspiel noch ein genügendes axiales Verspannen der Teile gewährleistet werden kann, und andererseits ist bei sich ergebendem Minimalspiel die Pressung der montierten Bauteile noch nicht so groß, daß eine Schwergängigkeit der vom Motorantrieb anzutreibenden Teile bzw. eine Verklemmung dieser Teile auftreten kann.

Dadurch, daß die Federlippen tangential verlaufend, insbesondere in Nähe der äußeren Umfangsfläche der Dämpfungsscheibe, angeordnet sind, kann zusätzlich in vorteilhafter Weise durch die Federlippen-Abstützung ein Verkanten des auf der Abtriebswelle zur Berücksichtigung der großen betriebsmäßigen Temperaturunterschiede mit relativ großem Radialspiel drehbar gelagerten Zahnrades aufgrund der radial weit außen liegenden Federlippen-Abstützung an der Mitnehmerscheibe verhindert und somit ein optimaler Eingriff der das Zahnrad antreibenden Schneckenwelle bei geringer Reibung und geringem Verschleiß gewährleistet werden.

Durch Änderung der axialen Höhe, der Profilierung und/oder Verteilung der Federlippen auf der einen Stirnfläche der Dämpfungsscheibe ist eine Anpassung an verschiedene Konstruktionen bzw. Vorspanndrucke auf einfache Weise möglich.

Die Erfindung sowie weitere vorteilhafte Ausgestaltungen der Erfindung werden im folgenden anhand eines schematisch dargestellten Ausführungsbeispieles in der Zeichnung näher erläutert; darin zeigen:

FIG 1 in einem axialen Längsschnittbild einen Kraftfahrzeug-Fensterheberantrieb;

FIG 2 einen Schnitt durch das Getriebegehäuse des in FIG 1 dargestellten Kraftfahrzeug-Fensterheberantriebes gemäß Schnittverlauf II–II;

FIG 3 eine Draufsicht auf die dem Zahnrad zugewandte Oberfläche der Dämpfungsscheibe;

FIG 4 eine Draufsicht die der Mitnehmerscheibe zugewandte Oberfläche der Dämpfungsscheibe.

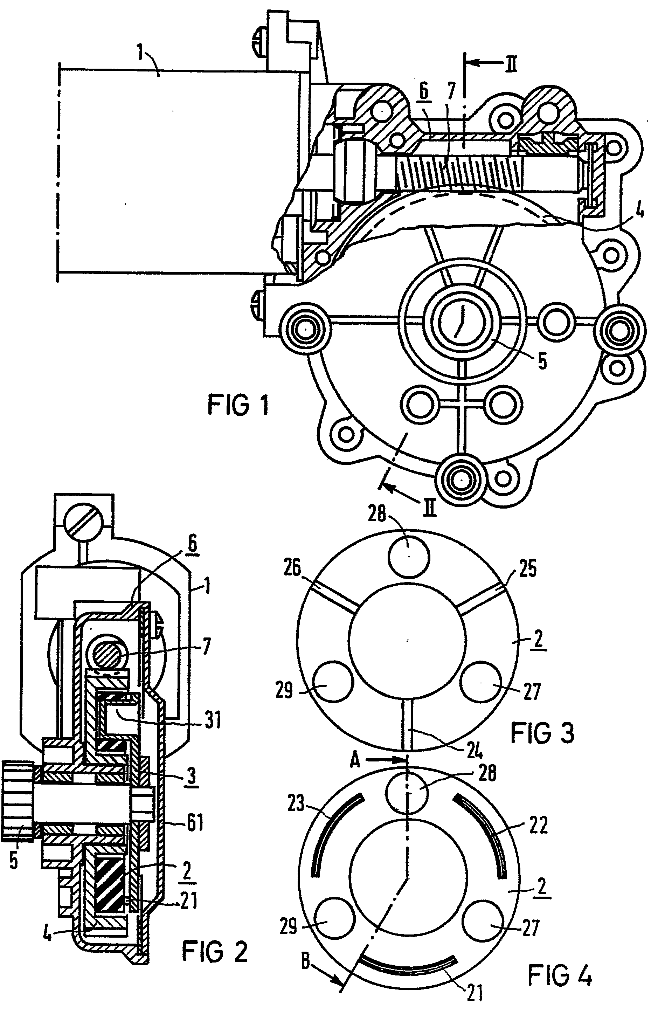

FIG 1 zeigt in einem axialen Längs-Teilschnittbild einen Kraftfahrzeug-Fensterheberantrieb mit einem nur schematisch angedeuteten Kommutatormotor 1, dessen verlängerte Läuferwelle als Schneckenwelle 7 in ein an das Gehäuse des Kommutatormotors 1 angeflanschtes topfförmiges, mit einem Getriebegehäusedeckel 61 verschließbares Getriebegehäuse 6 ragt und ein in diesem auf einer Abtriebswelle 5 drehbar gelagertes Zahnrad 4 antreibt.

Das Zahnrad 4 steht über die Dämpfungsscheibe 2 in Drehmitnahmeverbindung mit der Mitnehmerscheibe 3, die ihrerseits mit der Abtriebswelle 5 verbunden ist. Zur Drehmitnahmeverbindung zwischen dem Zahnrad 4 und der Mitnehmerscheibe 3 weist das Zahnrad 4 über den Umfang verteilt drei radial verlaufende, axial vorstehende Mitnahmestege auf, die in korrespondierende axiale erste Mitnahmeöffnungen 24–26 eingreifen, die in die zahnradseitige Oberfläche des Dämpfungselementes 2 eingelassen sind. Zur Mitnahme zwischen dem Dämpfungselement 2 und der axial vorgelagerten Mitnehmerscheibe 3 sind an der Mitnehmerscheibe 3 axiale vorstehende, zur Dämpfungsscheibe 2 gerichtete Mitnahmestege 31–33 in Form von Nocken vorgesehen, von denen in FIG 2 nur ein Mitnahmesteg 31 sichtbar ist; die Mitnahmestege 31–33 der Mitnehmerscheibe 3 greifen in korrespondierende zweite Mitnahmeöffnungen 27–29 der Dämpfungsscheibe 2 ein.

Beim Zusammenbau der Getriebeanordnung wird gemäß FIG 2 die Abtriebswelle 5 von links in das Getriebegehäuse 6 eingeführt; auf das rechte Ende der Abtriebswelle 5 werden dann das Zahnrad 4, die Dämpfungsscheibe 2 und die Mitnehmerscheibe 3 aufgesteckt und die gesamte axial durch Pressung der Federlippen 21–23 vorgespannte Bauteilanordnung durch Verstemmen der Mitnehmerscheibe 2 mit dem rechten Ende der Abtriebswelle 5 derart festgelegt, daß beim axialen Anlauf in der einen Richtung sich die Abtriebswelle 5 über das linke Abtriebsritzel gegen die linke Außenwandung des Getriebegehäuses 6 und beim axialen Anlauf in der anderen Richtung über die Mitnehmerscheibe 3, die Dämpfungsscheibe 2 und das Zahnrad 4 an der linken Innenwandung des Getriebegehäuses 6 abstützt.

Zur Erläuterung der Erfindung wird insbesondere auf FIG 4 sowie den unteren Teil der FIG 2 verwiesen, welche die eingebaute Dämpfungsscheibe 2 gemäß FIG 4 in der Ansicht gemäß Schnittverlauf A–B zeigt.

Zum erfindungsgemäßen Längentoleranzausgleich sind an die mitnahmescheibenseitige Oberfläche der Dämpfungsscheibe 2 über den äußeren Umfang verteilt drei tangential in Abstand zueinander verlaufende Federlippen 21–23 einstückig mitangespritzt, die bei der gegenseitigen axialen Verspannung von Zahnrad 4, Mitnehmerscheibe 3 und Dämpfungsscheibe 2 je nach der im Einzelfall vorhandenen Gesamttoleranz unterschiedlich stark axial gepreßt werden. Im vorliegenden Ausführungsbeispiel sind als zweckmäßige Ausführungsform zu ihren axial freien Vorderkanten sich verjüngende Federlippen mit einem tangentialen Erstreckungsumfangswinkel von ca. 60° vorgesehen. Es können jedoch auch andere im Einzelfall geeignetere Formgebungen des Querschnittes in Anpassung an die individuellen Gegebenheiten vorgesehen werden. Vorteilhafte Lippenformen sind z.B. Kreisbögen, gerader Verlauf in radialer, axialer oder sternförmiger Anordnung, runde oder ovale Noppen zylindrischen oder kegelförmigen Querschnitts. Auch die Anordnung der Federlippen auf der Oberfläche der Dämpfungsscheiben können optimal angepaßt werden, indem sie z.B. entweder mittig oder mehr oder weniger weit zum Außenumfang hin verlaufend verteilt sind.

## Patentansprüche

1. Getriebeanordnung, insbesondere für Kraftfahrzeug-Fensterheberantriebe, deren in einem Getriebegehäuse (6) drehbar gelagerte Abtriebswelle (5) mittels einer an dieser befestigten Mitnehmerscheibe (3) über eine axial zwischengelegte Dämpfungsscheibe (2) in Drehmitnahmeverbindung mit einem von einer Antriebswelle, insbesondere einer Schneckenwelle (7), angetriebenen Zahnrad (4) steht und axial direkt und/oder indirekt über die Dämpfungsscheibe und das Zahnrad gegen das Getriebegehäuse abstützbar ist, dadurch gekennzeichnet, daß zur Bildung eines definierten axialen Vorspanndruckes auf die am Getriebegehäuse (6) abstützbaren Bauteile die elastische Dämpfungsscheibe (2) mittels über ihren Umfang, insbesondere in Nähe des äußeren Randes verteilter, axial vorstehender tangential verlaufender Federlippen (21–23) abgestützt ist.

2. Getriebeanordnung mit einer Gummi-Dämpfungsscheibe nach Anspruch 1, dadurch gekennzeichnet, daß die Federlippen (21–23) einstückig an die Dämpfungsscheibe (2) angeformt sind.

3. Getriebeanordnung mit einer Dämpfungsscheibe (2) mit ersten axialen Mitnahmeöffnungen (24–26) an ihrer zahnradseitigen Oberfläche, in die korrespondierende axiale Mitnahmestege des Zahnrades (4) eingreifen, und mit zweiten axialen Mitnahmeöffnungen (27–29) an ihrer mitnehmerseitigen Oberfläche, in die axiale Mitnahmestege (31) der Mitnehmerscheibe (3) eingreifen, nach Anspruch 1 und/oder 2, dadurch gekennzeichnet, daß die Federlippen (21–23) auf den Zwischenflächen zwischen den zweiten axialen Mitnahmeöffnungen (27–29) angeordnet sind.

4. Getriebeanordnung nach einem der Ansprüche 1 bis 3, dadurch gekennzeichnet, daß das Zahnrad (4) über eine Schneckenwelle (7) von einem aus einem Kraftfahrzeug-Bordnetz gespeisten Elektromotor (1) angetrieben und die Mitnehmerscheibe (3) über die Abtriebswelle (5) mit einem Kraftfahrzeug-Fensterheberantrieb verbunden sind.

## Revendications

1. Transmission, notamment pour des dispositifs d'entraînement de lève-glace de véhicule automobile, dont l'arbre mené (5), qui est monté rotatif dans un boîtier (6) de la transmission, est relié, selon une liaison d'entraînement en rotation, au moyen d'un disque d'entraînement (3) fixé à cet arbre et par l'intermédiaire d'un disque amortisseur (2) intercalé axialement, à un pignon (4) entraîné par un arbre d'entraînement, notamment par un arbre à vis sans fin (7), et peut être soutenu axialement, directement et/ou indirectement par l'intermédiaire du disque amortisseur et du pignon, contre le boîtier de la transmission, caractérisé par le fait que pour l'établissement d'une pression de précontrainte axiale définie sur les composants pouvant être soutenus par le boîtier (6) de la transmission, le disque amortisseur (2) est soutenu au moyen de lèvres formant ressorts tangentiels (21–23), qui font saillie axialement et qui sont réparties sur le pourtour du disque, notamment au voisinage du bord extérieur.

2. Transmission comportant un disque d'amortissement en caoutchouc suivant la revendication 1, caractérisé par le fait que les lèvres formant ressorts (21–23) sont formées d'un seul tenant par moulage sur le disque amortisseur (2).

3. Transmission comportant un disque amortisseur (2) possédant de premières ouvertures axiales d'entraînement (24–26), qui sont situées au niveau de la surface du disque, tournée du côté du pignon et dans lesquelles s'engagent des barrettes axiales d'entraînement (4), et des secondes ouvertures axiales d'entraînement (27–29), qui sont situées au niveau de la surface du disque, tournée vers le côté entraînement, et dans lesquelles s'engagent des barrettes axiales d'entraînement (31) du disque d'entraînement (3), suivant la revendication 1 et/ou 2, caractérisé par le fait que les lèvres formant ressorts (21–23) sont disposées sur les surfaces intercalaires présentes entre les secondes ouvertures axiales d'entraînement (27–29).

4. Transmission suivant l'une des revendications 1 à 3, caractérisé par le fait que le pignon (4) est entraîné par l'intermédiaire d'un arbre (7) à vis sans fin, par un moteur électrique (1) alimenté à partir du réseau de bord du véhicule automobile, et que le disque d'entraînement (3) est relié, par l'intermédiaire de l'arbre mené (5), à un dispositif d'entraînement de lève-glace du véhicule automobile.

**Claims**

1. Gearing arrangement, particularly for window lifter drives of motor vehicles, the driving shaft (5) of which, rotatably mounted in a gearing housing (6), is connected in rotational synchronization to a gear wheel (4), driven by a drive shaft, more particularly a worm shaft (7), by means of a carrier disk (3), fastened onto the driving shaft (5), through an axially interposed damping disk (2), and which driving shaft (5) can be supported axially directly and/or indirectly by means of the damping disk and the gear wheel against the gearing housing, characterized in that for the formation of a defined axial prestressing pressure on the component parts, supportable on the gearing housing (6), the flexible damping disk (2) is supported by means of axially projecting, tangentially extending spring lips (21–23), distributed across its circumference, more particularly in the vicinity of the outer edge.

2. Gearing arrangement with a rubber damping disk according to claim 1, characterized in that the spring lips (21–23) are integrally moulded in one piece onto the damping disk (2).

3. Gearing arrangement with a damping disk (2) having first axial synchronization openings (24–26) on its surface on the gear wheel side, into which corresponding axial synchronization bars of the gear wheel (4) engage, and having second axial synchronization openings (27–29) on its surface on the carrier side, into which axial synchronization bars (31) of the carrier disk (3) engage, according to claim 1 and/or 2, characterized in that the spring lips (21–23) are arranged on the intermediate surfaces between the second axial synchronization openings (27–29).

4. Gearing arrangement according to one of claims 1 to 3, characterized in that the gear wheel (4) is driven by means of a worm shaft (7) by an electric motor (1), supplied by the on-board system of a motor vehicle, and the carrier disk (3) is connected by means of the driving shaft (5) to a window lifter drive of a motor vehicle.

EP 0 261 525 B1

FIG 1

FIG 2

FIG 3

FIG 4